# EUROPÄISCHE PATENTSCHRIFT

(11) **EP 0 802 336 B1**
(45) Veröffentlichungstag und Bekanntmachung des Hinweises auf die Patenterteilung: **13.01.1999**
(21) Anmeldenummer: 97105899.5
(22) Anmeldetag: 10.04.1997
(51) Int. Cl.: F16B 7/06, F16B 39/12

(54) **Hülsen zum Kontern und Abdecken von Gewinden**
Sleeves for locking and covering of threads
Douilles de blocage et de recouvrement pour filitages

(30) Priorität: 16.04.1996 DE 19614948
(43) Veröffentlichungstag der Anmeldung: 22.10.1997
(73) Patentinhaber: Betschart, Anton-Peter, Dr.-Ing., 73087 Bad Boll (DE)
(72) Erfinder: Betschart, Anton-Peter, Dr.-Ing., 73087 Bad Boll (DE)

(56) Entgegenhaltungen:
- EP-A- 0 362 132
- US-A- 1 473 321
- US-A- 1 480 253
- US-A- 3 687 488
- US-A- 5 004 367

## Beschreibung

Die Erfindung betrifft eine Hülse- / Schaftverbindung bei einem Stabanker für Zugstabsysteme nach dem Oberbegriff der Ansprüche 1 und 2 und eine Hülse für solch eine Verbindung nach den Ansprüchen 4 und 6, wie aus der US-A-3 687 488 bekannt.

Es ist eine Abdeckung von Stabgewinden in Gestalt von Hülsen bekannt geworden. Durch Drehen dieser Hülsen gegen einen Schaft wird auch ein geringer Kontereffekt erzielt, jedoch nur mit grossem Kraftaufwand, da die Konterfläche zwischen Hülse und Schaft klein ist. Das Kontern und Öffnen wird formschlüssig mittels Gabel- oder Hakenschlüsseln vorgenommen. Für jede Schlüsselweite muss ein passender Schlüssel vorhanden sein. Die Baupraxis zeigt, dass deshalb oft ungeeignete Werkzeuge wie Rohrzangen und dergleichen verwendet werden, welche die Oberflächen verletzen.

Ein nachträgliches Lösen, besonders bei Zug- und dynamischer Beanspruchung ist nicht ausgeschlossen. Die Sicherheit ist deshalb nicht gewährleistet. Eine teilweise Abdeckung des Gewindes ist aus der DE 87 07 293 U1 bekannt geworden, jedoch nur durch einen gewindefreien Bereich im Schaft und nicht durch eine getrennte Hülse. Die Sicherung der Eindrehtiefe wird (wie ebenfalls auch in der DE 39 34 531 C2) durch ein Kontrolloch und teilweise durch den gewindefreien Bereich im Schaft erreicht. Eine vergleichbare Sicherung der Eindrehtiefe des Gewindes ist in der DE 39 22 070 C1 bekannt geworden, bei der die Sicherung auch durch einen gewindefreien Bereich im Schaft erzielt wird und nicht durch eine zusätzliche Hülse, die gleichzeitig auch ein Kontern ermöglicht und die, wenn nicht notwendig, auch weggelassen werden kann.

Um diesen Schwachstellen entgegenzuwirken, müssten bei der bekannten Hülse die Konterflächen des Gewindeschaftes und der Hülse unwirtschaftlich vergrössert werden. Ein weiterer Nachteil der bekannten Hülsenausführung ist, dass die Kontaktflächen beispielsweise für eine Verklebung zur Sicherung gegen Lösen ungeeignet und zu klein sind.

Aufgabe der Erfindung ist es, eine erhöhte Sicherung des Stabes gegen Verdrehen und damit Lösen der Verbindung zu erreichen und die Hülsengeometrie derart zu gestalten, dass das Drehmoment zum Kontern und Lösen erhöht, und die dazu erforderlichen Werkzeuge vereinfacht werden.

Die Aufgabe wird erfindungsgemäss durch die im kennzeichnenden Teil der unabhängigen Ansprüche angegebenen Merkmale gelöst.

Im folgenden wird die Erfindung anhand eines in den Zeichnungen dargestellten möglichen Anwendungsbeispiels erläutert.

Es zeigen
**Fig. 1** eine teilweise in Längsachse geschnittene Hülse mit konischer Einfügung in den Schaft,
**Fig. 2** eine teilweise in Längsachse geschnittene Hülse mit parallel zur Längsachse verlaufender Einfügung in den Schaft,
**Fig. 3** einen Schnitt durch eine V-förmige Kerbe,
**Fig. 4** einen Schnitt durch eine V-förmige Kerbe mit Zwischenfläche,
**Fig. 5** einen Schnitt durch eine Schlagkerbenausführung mit einem etwa halben flächigen Kreisabschnitt, der durch eine rechtwinklig radial verlaufende Fläche zur rechtsorientierten Krafteinleitung begrenzt wird,
**Fig. 6** einen Schnitt durch eine Schlagkerbenausführung mit einem etwa halben flächigen Kreisabschnitt, der durch eine rechtwinklig radial verlaufende Fläche zur linksorientierten Krafteinleitung begrenzt wird und
**Fig. 7** einen Schnitt durch eine Schlagkerbenausführung mit einem flächigen Kreisabschnitt, der einen Mittelsteg mit zwei gegenüberliegenden, paralellen, rechtwinklig radial verlaufenden Flächen aufweist.

Um die Konterwirkung zu verstärken und ein Lösen der Konterung zu verhindern, ist das auf der Schaftseite liegende Ende der Hülse derart gestaltet, dass ein Teil des Hülsenendes (1) in den Schaft (2) hineinragt. Der hineinragende Teil (1) wird nach einer Lösung nach Anspruch 1 konisch (3) ausgeführt, was die Reib- und Klemmwirkung wesentlich erhöht. Nach einer weiteren Lösung nach Anspruch 2 ist der Teil (**1**) zylindrisch (**4**) ausgebildet. Bei dieser Lösung ist zur Erhöhung der Sicherung gegen Verdrehen des Stabes eine zusätzliche Kleb- oder Bolzenverbindung erforderlich.

In vielen Fällen wird die Reib- und Klemmwirkung der der Erfindung zugrunde liegenden Hülse-/Schaftverbindungen ausreichen. Bei grosser Gefahr des Lösens, etwa bei Zug- und/oder dynamischer Beanspruchung der Konstruktion, kann die erfindungsgemässe Verbindung vorteilhaft durch zusätzliches Verkleben (**5**) und/oder Verstiften (**6**) unlösbar gemacht werden.

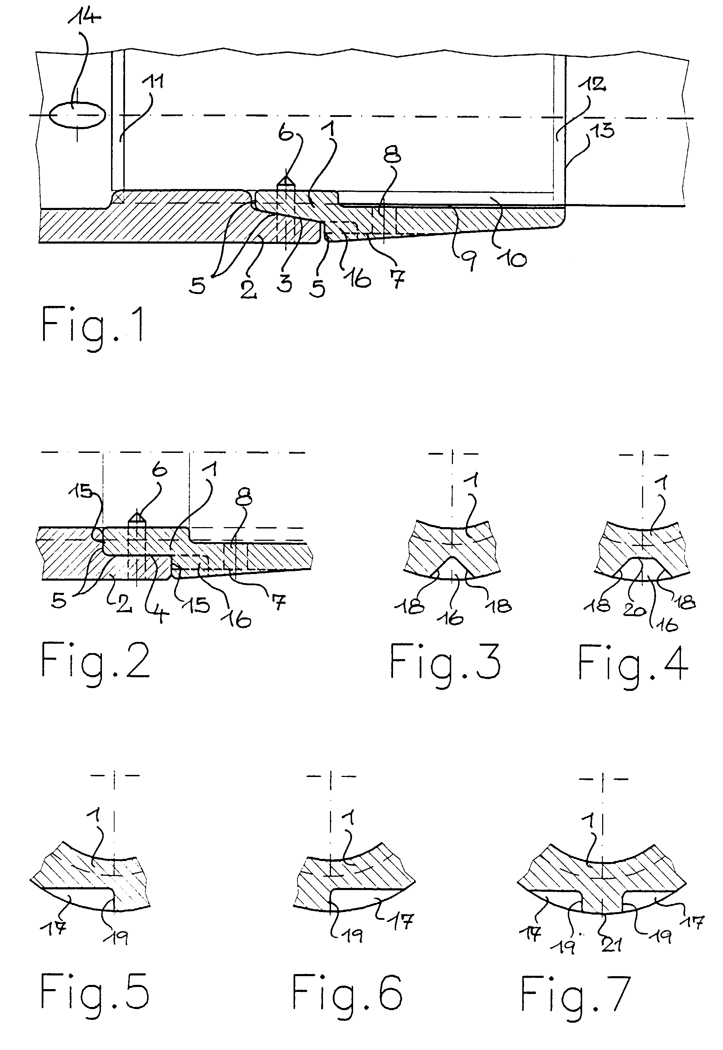

Um die Krafteinwirkung zur Konterung zu erhöhen und die dazu erforderlichen Werkzeuge zu vereinfachen sind bei den in Fig. 3 und 4 dargestellten Lösungsvorschlägen in die Konterhülse (**1**), vorzugsweise an deren dem Schaft (**2**) zugewandten Ende, V-förmige Schlagkerben (**16**) oder Kreisabschnitt/radialförmig angeordnete Schlagkerben (**17)** vorgesehen. Die durch die Geometrie der Schlagkerben gebildeten Schlagflächen (**18** und **19**) ermöglichen ein Kontern und Lösen der Hülsen mittels einfacher Werkzeuge wie Schlagstift und Hammer. Das durch die schlagartig/dynamische Krafteinwirkung resultierende Drehmoment erzeugt einen sehr hohen Kontereffekt, was die Sicherheit der Hülse-/Schaftverbindung gegen Drehen des Stabgewindes erhöht. In Gegenrichtung wird das Lösen der Hülse erleichtert.

Bei den in Fig. 5 und 6 dargestellten Lösungsvorschlägen müssen die Schlagflächen (**19**) dem jeweiligen Verwendungszweck wie Kontern oder Lösen, bzw. Links- oder Rechtsgewinde, gegenläufig angeordnet sein. Ein Beispiel für den universellen Einsatz zeigt Fig. 7. Die Aufgabe ist dort durch einen Mittelsteg (**21**) gelöst.

Je steiler die Schlagflächen angeordnet sind, desto grösser ist das resultierende Drehmoment, welches beispielsweise bei der Schlagfläche (**19**) grösser ist als bei der Schlagfläche (**18**). Um die Zugänglichkeit des Schlagstiftes zu erleichtern, ist es bei der V-förmigen Ausführung vorteilhaft, zwischen den Kerben eine Fläche (**20**) anzuordnen.

Anstelle der schlagartigen Krafterzeugung können auch der Kerbengeometrie entsprechende, formschlüssige Hakenschlüssel oder zangenförmige Werkzeuge verwendet werden.

Der gewindefreie Bereich (**9**) der Hülse dient zur Abdeckung des dem Kontergewinde überstehenden Restgewindes (**10**). Soll das Restgewinde durch die Hülse vollständig abgedeckt werden, muss die Hülse mindestens so lang sein, dass das Restgewinde erst dann abgedeckt ist, wenn durch die erforderliche Eindrehtiefe (**11**) die maximale Kraftübertragung gewährleistet ist.

Als zusätzliche Sicherung der Eindrehtiefe (**11**) kann ein rund oder oval ausgebildetes Kontrolloch (**14**) sinvoll sein. Ein Kontrolloch wird jedoch dann erforderlich, wenn der gewindefreie Bereich (**9**) der Hülse länger oder kürzer ist als das Restgewindeende (**12**), bzw. wenn das Hülsenende (**13**) über das Restgewindeende hinausragt.

## Patentansprüche

1. Hülse- /Schaftverbindung bei einem Stabanker für Zugstabsysteme mit einem Schaft (2) und einer Hülse (1), die jeweils ein Innengewinde aufweisen und darüber mit einem Außengewinde (10) eines Stabes in Verbindung stehen, wobei der Schaft (2) und die Hülse (1) an ihren zugewandten Enden konisch ausgebildete, aneinander anliegende, zur Konterung dienende Flächen (3) aufweisen, wobei das Hülsenende in das Schaftende hineinragt, dadurch gekennzeichnet, daß das Schaftende (2) mit dem Hülsenende (1) und/oder dem Außengewinde des Stabes durch einen Stift (6) und/oder Verklebung gegen Lösen verbunden ist und wobei die Hülse (1) zum Abdecken des Außengewindes des Stabes dient.

2. Hülse- /Schaftverbindung bei einem Stabanker für Zugstabsysteme mit einem Schaft (2) und einer Hülse (1), die jeweils ein Innengewinde aufweisen und darüber mit einem Außengewinde (10) eines Stabes in Verbindung stehen, dadurch gekennzeichnet, daß der Schaft (2) und die Hülse (1) an ihren zugewandten Enden zylindrisch ausgebildete, aneinander zugewandte Flächen (4) aufweisen, wobei das Hülsenende (1) in das Schaftende (2) hineinragt und die Stirnflächen (15) zur Konterung dienen und wobei das Schaftende (2) mit dem Hülsenende (1) und/oder dem Außengewinde des Stabes durch einen Stift (6) und/oder Verklebung gegen Lösen verbunden ist, wobei die Hülse (1) zum Abdecken des Außengewindes des Stabes dient.

3. Hülse- /Schaftverbindung nach einem der vorhergehenden Ansprüche, dadurch gekennzeichnet, daß der Schaft (2) ein Kontrolloch (14) aufweist, und die Länge der Hülse (1) so bemessen ist, daß sich das Außengewinde des Stabes vom Kontrolloch (14) bis zum dem Schaft (2) abgewandten Ende (13) der Hülse (1) erstreckt.

4. Hülse (1) für eine Hülse- /Schaftverbindung, dadurch gekennzeichnet, daß die Hülse (1) eine oder mehrere V- förmige Schlagkerben (16) zum Kontern oder Lösen aufweist.

5. Hülse (1) nach Anspruch 4, dadurch gekennzeichnet, daß zwischen den Schlagflächen (18) der Schlagkerben (16) eine Fläche (20) angeordnet ist.

6. Hülse (1) für eine Hülse- /Schaftverbindung, die Schlagkerben (17) zum Kontern oder Lösen aufweist, dadurch gekennzeichnet, daß die Schlagkerben (17) einen flächigen Kreisabschnitt bilden, der durch eine rechtwinkelig verlaufende Schlagfläche (19) endet.

7. Hülse (1) nach Anspruch 6, dadurch gekennzeichnet, daß die Schlagkerben (17) bis zum Schnittpunkt mit dem Achsenkreuz einen halben flächigen Kreisabschnitt bilden, der durch eine rechtwinkelig radial verlaufende Schlagflächen (19) endet.

8. Hülse (1) nach Anspruch 6, dadurch gekennzeichnet, daß zwischen zwei gegenüberliegende Schlagflächen (19) ein Mittelsteg (21) angeordnet ist.

## Claims

1. A sleeve/shaft connection in a rod anchor for tension rod systems having a shaft (2) and a sleeve (1) which each have internal threads and are thereby connected to external threads (10) of a rod, the shaft (2) and sleeve (1) having at their facing ends conically configured surfaces (3) which rest against one another and serve for locking, the sleeve end projecting into the shaft end, wherein the shaft end (2) is connected to the sleeve end (1) and/or to the external threads of the rod via a pin (6) and/or adhesive bonding to prevent loosening, the sleeve (1) serving to cover the external threads of the rod.

2. A sleeve/shaft connection in a rod anchor for tension rod systems having a shaft (2) and a sleeve (1) which each have internal threads and are thereby connected to external threads (10) of a rod, wherein the shaft (2) and sleeve (1) have at their facing ends cylindrically configured surfaces (4) which face one another, the sleeve end (1) projecting into the shaft end (2) and the end surfaces (15) serving for locking, and the shaft end (2) being connected to the sleeve end (1) and/or to the external threads of the rod via a pin (6) and/or adhesive bonding to prevent loosening, the sleeve (1) serving to cover the external threads of the rod.

3. The sleeve/shaft connection as defined in one of the foregoing claims, wherein the shaft (2) has a control hole (14) and the length of the sleeve (1) is dimensioned such that the outer threads of the rod extend from the control hole (14) to the end (13) of the sleeve (1) facing away from the shaft (2).

4. A sleeve (1) for a sleeve/shaft connection, wherein the sleeve (1) has one or more V-shaped impact notches (16) for locking or loosening.

5. The sleeve (1) as defined in Claim 4, wherein a surface (20) is arranged between the impact surfaces (18) of the impact notches (16).

6. A sleeve (1) for a sleeve/shaft connection which has impact notches (17) for locking or loosening, wherein the impact notches (17) constitute a planar circular segment which is terminated by an impact surface (19) running at right angles.

7. The sleeve (1) as defined in Claim 6, wherein the impact notches (17) constitute, up to the intersection point with the axis system, a half planar circular segment which is terminated by an impact surface (19) running radially at right angles.

8. The sleeve (1) as defined in Claim 6, wherein a centre web (21) is arranged between two opposing impact surfaces (19).

## Revendications

1. Liaison douille/tige sur un induit à barre pour systèmes à tirant avec une tige (2) et une douille (1), présentant respectivement un filet femelle et étant par-dessus en combinaison avec un filet mâle (10) d'une barre, la tige (2) et la douille (1) présentant sur leurs extrémités se faisant face des surfaces (3) de forme conique adjacentes servant au blocage, l'extrémité de la douille faisant saillie dans l'extrémité de la tige, caractérisée en ce que l'extrémité de la tige (2) est reliée avec l'extrémité da la douille (1) et/ou le filet mâle de la barre par un boulon (6) et/ou par collage pour éviter un détachement et la douille (1) servant au recouvrement du filet mâle de la barre.

2. Liaison douille/tige sur une induit à barre pour systèmes à tirant avec une tige (2) et une douille (1), présentant respectivement un filet femelle et étant par-dessus en combinaison avec un filet mâle (10) d'une barre, caractérisée en ce que la tige (2) et la douille (1) présentent sur leurs extrémités se faisant face des surfaces cylindriques (4) se faisant face, l'extrémité de la douille (1) faisant saillie dans l'extrémité de la tige (2) et les surfaces frontales (15) servant au blocage et l'extrémité de la tige (2) étant reliée avec l'extrémité de la douille (1) et/ou le filet mâle de la barre par un boulon (6) et/ou par collage pour éviter un détachement et la douille (1) servant au recouvrement du filet mâle de la barre.

3. Liaison douille/tige selon l'une des revendications précédentes, caractérisée en ce que la tige (2) présente un trou de contrôle (14) et que la longueur de la douille (1) est telle que le filet mâle de la barre s'étend du trou de contrôle (14) jusqu'à l'extrémité (13) de la douille (1) opposée à la tige (2).

4. Douille (1) pour une liaison douille/tige, caractérisée ce que la douille (1) présente une ou plusieurs encoches de chasse (16) en forme de V pour le blocage ou le desserrage.

5. Douille (1) selon la revendication 4, caractérisée en ce que une surface (20) est disposée entre les surface de chasse (18) des encoches de chasse (16).

6. Douille (1) pour une liaison douille/tige présentant des encoches de chasse (17) pour le blocage ou le desserrage, caractérisée en ce qui les encoches de chasse (17) forment un segment de cercle en nappe se terminant par une surface de chasse (19) orthogonale.

7. Douille (1) selon la revendication 6, caractérisée en ce que les encoches de chasse (17) forment un demi segment de cercle en nappe jusqu'à l'intersection du système d'axes se terminant par une surface de chasse (19) radiale à angles droits.

8. Douille (1) selon la revendication 6, caractérisée en ce que un pont (21) est disposé entre deux surfaces de chasse (19) opposées.
